# EUROPÄISCHE PATENTSCHRIFT

(11) **EP 1 188 916 B1**
(45) Veröffentlichungstag und Bekanntmachung des Hinweises auf die Patenterteilung: **21.09.2005**
(21) Anmeldenummer: 01117510.6
(22) Anmeldetag: 20.07.2001
(51) Int. Cl.: F02D 41/14, F02D 41/16, F02D 13/02

(54) **Verfahren und Vorrichtung zur Steuerung der zylinderselektiven Füllung bei Verbrennungsmotoren mit variablem Ventiltrieb**
Method and apparatus for controlling the air charging per cylinder in engines with variable valve driving
Méthode et dispositif de commande de remplissage par cylindre de moteurs à calage de soupapes variables

(30) Priorität: 19.09.2000 DE 10046221
(43) Veröffentlichungstag der Anmeldung: 20.03.2002
(73) Patentinhaber: Bayerische Motoren Werke Aktiengesellschaft, 80809 München (DE)
(72) Erfinder: Bayer, Michael, 81929 München (DE)

(56) Entgegenhaltungen:
- EP-A- 0 833 043
- DE-A- 4 024 369
- DE-A- 19 859 018

## Beschreibung

Die Erfindung betrifft ein Verfahren und eine Vorrichtung zur Steuerung der zylinderselektiven Füllung bei Verbrennungsmotoren mit variablem Ventiltrieb gemäß den Oberbegriffen der Ansprüche 1 bzw. 4.

Variable Ventiltriebe bei Verbrennungsmotoren sind allgemein bekannt. Dabei wird meist eine Exzenterwelle zur Hubhöhensteuerung der Einlassventile verstellt. Oftmals wird zur Verstellung der Exzenterwelle ein Elektromotor benutzt, es ist aber auch die Verwendung eines hydraulischen Systems oder anderer Systeme zur Verstellung der Exzenterwelle oder dergleichen Ventiltriebverstellsysteme möglich.

Derartige Systeme werden beispielsweise in der DE 198 59 018 A1, der DE 40 24 369 A1 und der EP-A-833 043 beschrieben.

Je nach verwendetem System für einen Ventiltrieb kommt es zu Fertigungstoleranzen, beispielsweise beim Ventilkopf, bei einem Rollenschlepphebel, bei einem Zwischenhebel oder bei der Exzenterwelle selbst. Dies führt zu einer unterschiedlichen Befüllung der einzelnen Zylinder. Insbesondere im Leerlaufbetrieb resultiert daraus ein "unrunder Lauf" des Motors. Bei direkteinspritzenden Motoren kann dies zum Erreichen der Laufgrenze führen, bei der im Zylinder keine Verbrennung mehr erfolgt.

Eine wahrnehmbare Laufunruhe bei einem Fahrzeug ist jedoch in der Regel nicht tolerabel. Daher wird bisher durch Einengung der Fertigungstoleranzen versucht, eine Befüllungsgleichverteilung in einem Bereich von +/- 10 Prozent zu erreichen. Dies stellt meist einen akzeptablen Füllungsunterschied dar. Die Minimierung der Fertigungstoleranzen ist jedoch sehr kostspielig. Beispielsweise müssen die Einzelkomponenten vermessen werden. Im Extremfall ist sogar eine Demontage eines Zylinderkopfes mit anschließender Nacharbeit notwendig.

Aufgabe der vorliegenden Erfindung ist es, bei Verbrennungsmotoren mit variablem Ventiltrieb einen befriedigenden Leerlaufkomfort bzw. eine ausreichende Laufruhe bei geringer Drehzahl auch bei normalen Fertigungstoleranzen zu erreichen.

Diese Aufgabe wird durch die in den Ansprüchen 1 bzw. 4 genannten Merkmale gelöst.

Ein Kerngedanke der vorliegenden Erfindung ist die Verwendung des variablen Ventiltriebs zum Ausgleich einer unterschiedlichen Zylinderbefüllung. Zur Erkennung einer unterschiedlichen Zylinderbefüllung werden entweder Laufunruhegrößen (z.B. Drehzahl, Drehmoment), Ventilhubgrößen (z.B. Ventilhub direkt) oder andere, auf eine unterschiedliche Befüllung hindeutende Größen (z.B. Lambda-Signal) herangezogen. Aufgrund dieser Eingangsgrößen wird in einer Steuereinrichtung eine Steuergröße erzeugt, mittels der ein Aktor des Ventiltriebs so beaufschlagt wird, dass in der Zeit zwischen den Füllungen von nacheinander zu befüllenden Zylindern eine andere Einstellung am Ventiltrieb, beispielsweise bei der Exzenterwelle, herbeigeführt wird. Durch die zylinderselektive Verstellung der Exzenterwelle, insbesondere im leerlaufnahen Bereich, lassen sich die Ventilerhebungskurven derart verändern, dass ein durch Fertigungstoleranzen an sich verursachter Füllungsunterschied ausgeglichen werden kann.

Werden mehrere Einlassventile pro Zylinder verwendet, so kann auch eine Mittelung über diese Ventile stattfinden. Dies ist insbesondere dann von Vorteil, wenn als Eingangsgröße der Ventilhub oder die Öffnungsdauer eines Ventils dient.

Die vorliegende Erfindung wird nachfolgend mit Bezug auf die beiliegende Zeichnung näher erläutert. Die Zeichnungen zeigen in
- Figur 1: eine schematische Darstellung eines variablen Ventiltriebs mit Aktor,
- Figur 2: ein schematisches Blockschaltdiagramm einer Ausführungsform der vorliegenden Erfindung und
- Figur 3: ein Diagramm, in dem Ventilhübe von 4 Zylindern eingezeichnet sind.

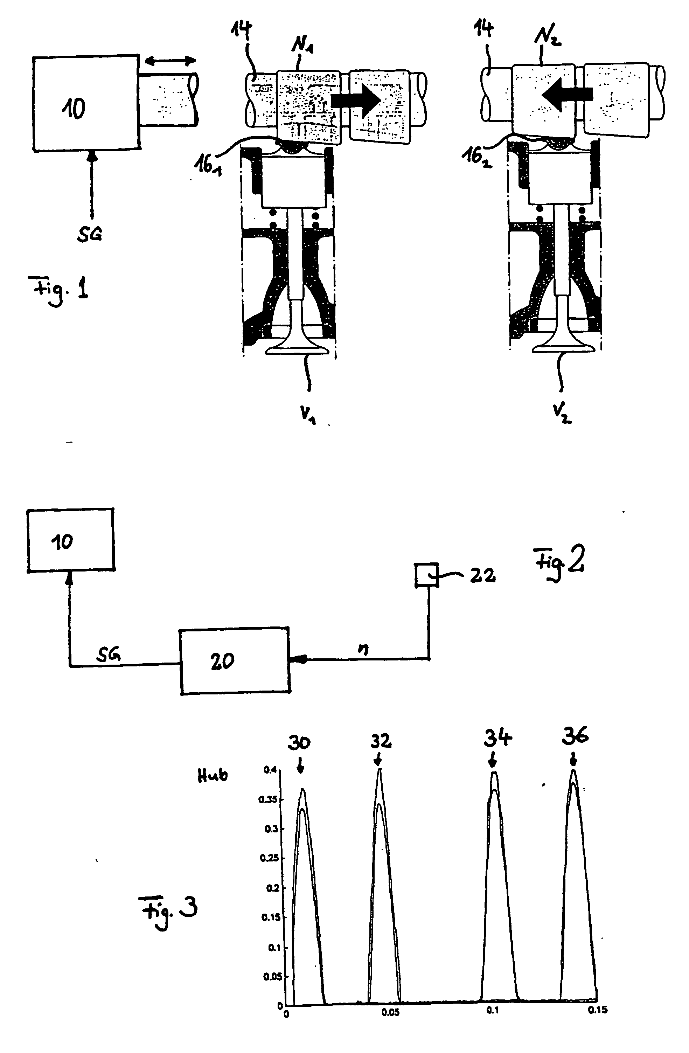

In Figur 3 sind mit den Kurven 30 bis 36 Hubwerte für jeweils zwei Einlassventile für vier Zylinder bei einem Motor dargestellt. Dabei bezeichnen die Kurven 30 den Hubverlauf zweier Einlassventile beim Zylinder 1, die Kurven 32 den Hubverlauf zweier Einlassventile beim Zylinder 2 und die Kurven 34 und 36 die Hubverläufe von jeweils zwei Einlassventilen für Zylinder 3 und 4 eines Verbrennungsmotors.

Wie aus Figur 3 zu erkennen ist, werden die beiden Einlassventile des Zylinders 1 nicht in gleichem Maße geöffnet (Kurven 30), wie die beiden Einlassventile des Zylinders 4 (Kurven 36). Sowohl bei der Bewertung der Befüllung über die arithmetischen Mittel der Maximalwerte beider Kurven oder über ein Integral der Öffnungszeiten, wird festgestellt, dass der Zylinder 1 weniger stark befüllt ist als der Zylinder 4, was durch Fertigungstoleranzen bedingt ist. Aus diesem Grunde tritt eine nicht-tolerable Laufunruhe im Leerlauf auf.

Um dies auszugleichen, wird der variable Ventiltrieb bei einem Verbrennungsmotor verwendet. Eine Ausführungsform eines solchen Ventiltriebs ist in Figur 1 dargestellt. Es wird jedoch darauf hingewiesen, dass variable Ventiltriebe in manigfacher Ausführungsform bekannt sind und die Erfindung sich allgemein auf variable Ventiltriebe anwenden lässt.

Bei dem Ausführungsbeispiel in Figur 1 ist eine Nockenwelle 14 dargestellt, die für jedes Einlassventil einen Nocken N₁, N₂ mit in Axialrichtung etwa konischer Form aufweist. Die Nockenwelle wird von einem Aktor 10, hier einem Elektromotor beaufschlagt, der sie in Axialrichtung verschieben kann. Durch eine Verschiebung der Nockenwelle in Axialrichtung werden die beiden Ventile V₁ und V₂, die vorliegend zu zwei verschiedenen Zylindern gehören, über das Nockenlager 16₁ und 16₂ verschieden weit geöffnet.

Zur Verdeutlichung der Wirkungsweise sind die beiden Nocken N₁ und N₂ verschieden verstellt. Normalerweise besteht natürlich eine Kopplung zwischen diesen beiden Nocken N₁ und N₂ über die Nockenwelle 14. Der Nocken N₁ befindet sich in seiner maximal nach rechts verschobenen Stellung, wodurch das Ventillager 16₁ sich auf einer Umfangslinie mit einem kleineren mittleren Durchmesser bewegt. Das Ventil V₁ wird daher generell nicht soweit geöffnet. Der Nocken N₂ hingegen ist in seiner maximalen Stellung nach links verschoben, so dass der mittlere Durchmesser der Umlauflinie nun größer geworden ist und das Ventil V₂ generell stärker geöffnet wird. Durch eine entsprechende Verschiebung der Nockenwelle 14 über den Aktor 10, welcher ein Steuersignal SG von einer Steuereinheit enthält, kann somit über das Öffnungsmaß der einzelne Ventile auch die Befüllung für die einzelnen Zylinder geregelt werden. Dies wird nun bei der vorliegenden Erfindung ausgenutzt.

Eine Ausführungsform der Erfindung ist in Figur 2 in Form eines einfachen Blockschaltbildes dargestellt. Gemäß Fig. 2 ist ein Drehzahlsensor 22 vorgesehen, der ein Drehzahlsignal n an die Steuereinrichtung 20 abgibt. Die Steuereinrichtung 20 erzeugt aus dem Drehzahlsignal n aufgrund der festgestellten Laufunruhe ein Steuersignal SG, welches dem Aktor zugeführt wird. Das Steuersignal ist so ausgebildet, dass bei einem Zylinder, bei dem eine geringere Befüllung festgestellt wird, der Aktor in Richtung größeren Zylinderhub verstellt wird. Bei einem Zylinder, bei dem eine zu große Befüllung festgestellt wird, wird der Aktor in Richtung eines kleineren Zylinderhubes verstellt. Bei einer geeigneten Applikation können dann die Ventilhöhen für jeden Zylinder so gesteuert werden, dass eine gleichmäßige Befüllung gewährleistbar ist. Dazu muss der Aktor 10 den variablen Ventiltrieb zwischen jeweils zwei Befüllungen von nacheinander zu befüllenden Zylindern entsprechend verstellt haben.

Wichtig dabei ist es, die Verstellung in der verbleibenden Zeit zu erreichen. Aus diesem Grunde ist die Verstellung für jeden Zylinder auch nur bei kleineren Drehzahlen sinnvoll. Gerade bei diesen Drehzahlen tritt aber eine signifikante Beeinträchtigung der Laufunruhe durch Fertigungstoleranzen ein. Da der Aktor durch die permanente Verstellung kontinuierlich gefordert ist, muss auf eine große Haltbarkeit Wert gelegt werden.

Die vorliegende Erfindung stellt eine gleichmäßige Befüllung ohne zusätzlichen Aufwand in Fertigung und Herstellung sicher, wobei auch eine ausreichende Leerlaufqualität unterhalb der momentanen Leerlaufdrehzahl erreicht werden kann. Ferner kann ein solches Verfahren und eine solche Vorrichtung auch adaptiv in der Weise eingesetzt werden, dass spätere Verschleißeffekte von Ventilen ausgeglichen werden.

## Patentansprüche

1. Verfahren zur Steuerung der zylinderselektiven Füllung bei Verbrennungsmotoren mit variablem Ventiltrieb, bei dem der Ventilhub und/oder die Ventilschließ- und Öffnungszeiten der Zylindereinlassventile mittels eines gemeinsamen Aktors (10) steuerbar sind,
**dadurch gekennzeichnet,**
**dass** zumindest eine Eingangsgröße (n) ermittelt wird, aufgrund der auf die Befüllung oder Befüllungsunterschiede der Zylinder geschlossen werden kann, und dass aus dieser Eingangsgröße (n) ein Steuersignal (SG) für den Aktor (10) des variablen Ventiltriebs (10, N1, N2) bestimmt wird, derart, dass unterschiedliche Befüllungen der Zylinder durch eine Ventiltriebverstellung ausgeglichen werden, wobei in der Zeit zwischen den Füllungen von nacheinander zu befüllenden Zylindern eine andere Einstellung am Ventiltrieb herbeigeführt wird.

2. Verfahren nach Anspruch 1,
**dadurch gekennzeichnet,**
**dass** die zum Ausgleich der Befüllung durchgeführte Ventiltriebverstellung im Bereich um die Leerlaufdrehzahl durchgeführt wird.

3. Verfahren nach Anspruch 1 oder 2,
**dadurch gekennzeichnet,**
**dass** als Eingangsgröße die Motordrehzahl (n), das Motordrehmoment, ein Lambda-Sondensignal, der Ventilhub direkt und/oder eine dem Ventilhub entsprechende Größen verwendet werden.

4. Vorrichtung zur Steuerung der zylinderselektiven Füllung bei Verbrennungsmotoren mit variablem Ventiltrieb, bei dem der Ventilhub und/oder die Ventilschließ- und Öffnungszeiten der Zylindereinlassventile mittels eines gemeinsamen Aktors (10) steuerbar sind,
**dadurch gekennzeichnet,**
**dass** zumindest ein Sensor (22) vorgesehen ist, mit dem eine Eingangsgröße (n) ermittelt wird, aufgrund der auf die Befüllung oder Befüllungsunterschiede der Zylinder geschlossen werden kann, und
**dass** eine Steuervorrichtung (20) vorgesehen ist, der die Eingangsgröße (n) zugeführt wird, und dass die Steuereinrichtung (20) derart ausgebildet ist, dass aus der Eingangsgröße (n) ein Steuersignal (SG) für den Aktor (10) des variablen Ventiltriebs (10, N1, N2) bestimmt wird, derart, dass unterschiedliche Befüllungen der Zylinder durch eine Ventiltriebverstellung ausgeglichen werden, wobei in der Zeit zwischen den Füllungen von nacheinander zu befüllenden Zylindern eine andere Einstellung am Ventiltrieb herbeigeführt wird, und dass die Steuereinrichtung (20) den Aktor (10) entsprechend beaufschlagt.

5. Vorrichtung nach Anspruch 4,
**dadurch gekennzeichnet,**
**dass** als Sensor ein Drehzahlsensor (22), ein Drehmomentsensor, eine Lambda-Sonde oder Ventilhubsensoren verwendet sind.

6. Vorrichtung nach Anspruch 4 oder 5,
**dadurch gekennzeichnet,**
**dass** die Steuereinrichtung (20) ein Drehzahlsignal erhält und dass der Befüllungsausgleich nur bei Drehzahlen im Bereich der Leerlaufdrehzahl durchgeführt wird.

## Claims

1. A method for controlling cylinder-selective charging in internal-combustion engines with variable valve drive, in which the valve lift and/or valve closing and opening times of the cylinder intake valves can be controlled by means of a common actuator (10), **characterised in that** at least one input variable (n) is determined, on the basis of which conclusions can be drawn about the charging or charging differences of the cylinders, and **in that** a control signal (SG) for the actuator (10) of the variable valve drive (10, N1, N2) can be determined from this input variable (n), in such a way that different chargings of the cylinders can be compensated by a valve drive adjustment, a different adjustment being brought about at the valve drive in the time between the chargings of cylinders to be charged one after the other.

2. A method according to claim 1, **characterised in that** the valve drive adjustment brought about to compensate the charging is carried out in the range around the idle speed.

3. A method according to claim 1 or 2, **characterised in that** the engine speed (n), the engine torque, a lambda probe signal, the valve lift directly and/or a variable corresponding to the valve lift are used as the input variable.

4. A device for controlling cylinder-selective charging in internal-combustion engines with a variable valve drive, in which the valve lift and/or the valve closing and opening times of the cylinder intake valves can be controlled by means of a common actuator (10), **characterised in that** at least one sensor (22) is provided, with which an input variable (n) is determined, on the basis of which conclusions can be drawn about the charging or charging differences of the cylinders, and **in that** a control device (20) is provided to which the input variable (n) is supplied, and **in that** the control device (20) is designed in such a way that a control signal (SG) for the actuator (10) of the variable valve drive (10, N1, N2) is determined from the input variable (n) in such a way that different chargings of the cylinders can be compensated by a valve drive adjustment, a different adjustment being carried out at the valve drive in the time between the chargings of cylinders to be charged one after the other and **in that** the control device (20) loads the actuator (10) accordingly.

5. A device according to claim 4, **characterised in that** a rotational speed sensor (22), a torque sensor, a lambda probe or valve lift sensors are used as a sensor.

6. A device according to claim 4 or 5, **characterised in that** the control device (20) contains a rotational speed signal and **in that** the charging compensation is only carried out at rotational speeds in the range of the idle speed.

## Revendications

1. Procédé pour commander le remplissage en fonction des cylindres, dans des moteurs à combustion interne comportant un mécanisme variable de soupapes, d'après lequel la levée de soupape et/ou les durées de fermeture et d'ouverture des soupapes d'admission de cylindre peuvent être commandées à l'aide d'un actionneur (10) commun,
**caractérisé en ce qu'**
on détermine au moins une grandeur d'entrée (n) à partir de laquelle il est possible de connaître le remplissage ou les différences de remplissage dans les cylindres et
un signal de commande (SG) destiné à l'actionneur (10) du mécanisme variable de soupapes (10, N1, N2) est déterminé à partir de cette grandeur d'entrée (n) de telle manière que le déplacement des mécanismes de soupape peut compenser les différences de remplissage dans les cylindres, le mécanisme de soupapes étant réglé différemment dans le laps de temps entre les remplissages successifs des cylindres.

2. Procédé selon la revendication 1,
**caractérisé en ce que**
pour compenser le remplissage, le déplacement du mécanisme de soupapes est réalisé autour de la vitesse de rotation de marche à vide.

3. Procédé selon la revendication 1 ou 2,
**caractérisé en ce que**
les grandeurs d'entrée utilisées sont la vitesse de rotation du moteur (n), le couple de rotation du moteur, un signal de sonde lambda, la levée de soupape elle-même et/ou une grandeur qui correspond à la levée de soupape.

4. Dispositif pour commander le remplissage en fonction des cylindres, dans des moteurs à combustion interne comportant un mécanisme variable de soupapes, dans lequel la levée de soupape et/ou les durées de fermeture et d'ouverture des soupapes d'admission de cylindre peuvent être commandées à l'aide d'un actionneur (10) commun,
**caractérisé en ce qu'**
on prévoit au moins un capteur (22) qui permet d'établir une grandeur d'entrée (n) à l'aide de laquelle il est possible de connaître le remplissage ou les différences de remplissage dans les cylindres et on prévoit un dispositif de commande (20) auquel est acheminée la grandeur d'entrée (n), et
l'installation de commande (20) est conçue de telle manière qu'un signal de commande (SG) destiné à l'actionneur (10) du mécanisme variable de soupapes (10, N1, N2) est déterminé à partir de la grandeur d'entrée (n) de telle manière que le déplacement des mécanismes de soupape compense les différences de remplissage dans les cylindres, le mécanisme de soupapes étant réglé différemment dans le laps de temps entre les remplissages successifs des cylindres, et
l'installation de commande (20) manoeuvre en conséquence l'actionneur (10).

5. Dispositif selon la revendication 4,
**caractérisé en ce que**
le capteur utilisé est un capteur de vitesse de rotation (22), un capteur de couple de rotation, une sonde lambda ou des capteurs de levée de soupape.

6. Dispositif selon la revendication 4 ou 5,
**caractérisé en ce qu'**
un signal de vitesse de rotation est fourni à l'installation de commande (20), et
le remplissage n'est compensé que lorsque les vitesses de rotation se trouvent dans la plage de la vitesse de rotation de marche à vide.
